# EUROPÄISCHE PATENTSCHRIFT

(11) **EP 3 528 064 B1**
(45) Veröffentlichungstag und Bekanntmachung des Hinweises auf die Patenterteilung: **06.12.2023**
(21) Anmeldenummer: 18156846.0
(22) Anmeldetag: 15.02.2018
(51) Int. Cl.: G05B 19/042, H04L 67/12, G06F 1/26, G05B 19/418

(54) **STEUERUNGSSYSTEM UND ZUGEHÖRIGES VERFAHREN ZUR INBETRIEBNAHME, STEUERUNG UND ÜBERWACHUNG FÜR STROMVERSORGUNGSKOMPONENTEN**
CONTROL SYSTEM AND ASSOCIATED METHOD FOR COMMISSIONING, CONTROLLING AND MONITORING CURRENT SUPPLY COMPONENTS
SYSTÈME DE COMMANDE ET PROCÉDÉ ASSOCIÉ DE MISE EN MARCHE, DE COMMANDE ET DE SURVEILLANCE POUR DES ÉLÉMENTS D'ALIMENTATION ÉLECTRIQUE

(43) Veröffentlichungstag der Anmeldung: 21.08.2019
(73) Patentinhaber: Siemens Aktiengesellschaft, 80333 München (DE)
(72) Erfinder: Allahut, Gerd, 91171 Greding (DE); Wieland, Erwin, 1130 Wien (AT); Schedlberger, Robert, 4283 Bad Zell (AT)
(74) Vertreter: Siemens Patent Attorneys

(56) Entgegenhaltungen:
- WO-A1-2015/169355
- WO-A2-2005/107035

## Beschreibung

### Technisches Gebiet

Die gegenständliche Erfindung betrifft ein Steuerungssystem für Stromversorgungskomponenten, wie z.B. elektrische Stromversorgungen, elektrische Sicherungen, Messeinheiten, etc. von zumindest einer Anlage, von welchen eine Energieversorgung von Steuer- und/oder Computereinheiten der zumindest einen Anlage überwacht und gesteuert wird. Weiterhin betrifft die vorliegende Erfindung auch ein zugehöriges Verfahren zur Inbetriebnahme, Steuerung und Überwachung von Stromkomponenten der zumindest einen Anlage mit dem erfindungsgemäßen Steuerungssystem.

### Stand der Technik

Als Automatisierungsanlage bzw. kurz Anlage wird allgemein eine ganz oder teilweise automatisierte, industrielle Anlage zur Fertigung von Produkten oder zur Steuerung von Prozessen bezeichnet. Für die Fertigung von Produkten bzw. zur Steuerung von Prozessen umfassen industrielle Anlagen üblicherweise Steuer- und/oder Computereinheiten wie z.B. so genannte Industrie-PCs und/oder intelligente elektronische, meist mikroprozessorbasierte Geräte (z.B. Steuergeräte, Schutzgeräte, Druck- und Temperaturmessumformer, Durchflussmesser, Stellantriebe, speicherprogrammierbare Steuerungen, etc.), von welchen anlageninterne bzw. anlagenspezifische Prozesse gesteuert, überwacht und/oder kontrolliert werden.

Für die Energieversorgung der Steuer- und/oder Computereinheiten werden in einer Anlage Stromversorgungskomponenten eingesetzt. Unter Stromversorgungskomponenten werden dabei alle Komponenten in einem Strompfad wie z.B. elektrische Stromversorgungen und/oder Schaltnetzteile, elektrische Sicherungen, Stromspeicher (z.B. Akkumulator, Kondensator, supraleitende magnetischer Energiespeicher, etc.), Messeinheiten, etc. verstanden, welche die Versorgung der jeweiligen Steuer- und/oder Computereinheit mit Energie über diesen Strompfad überwachen, steuern und sicherstellen und damit für möglichst störungsfreie Abläufe in der Anlage sorgen. Daher werden bei Anwendungen in industriellen Anlagen an die Stromversorgungskomponenten besondere Anforderungen gestellt. So spielen beispielsweise eine flexible und einfache Konfigurierung und Inbetriebnahme eine wichtige Rolle. Vor allem bei der Konzeption/Konfiguration von neuen Anlagen sowie bei Umbauten bestehender Industrieanlagen ist eine zuverlässige Versorgung der jeweiligen Steuer-und/oder Computereinheiten mit Energie sicherzustellen, um einen möglichst störungsfreien Betrieb der jeweiligen Anlage zu ermöglichen. Daher wäre speziell für Stromversorgungskomponenten ein einfach handhabbares und flexibles Steuerungs- und Überwachungssystem wünschenswert.

Im Anlagenbereich werden heutzutage beispielsweise für eine Konfiguration von Automatisierungskomponenten (z.B. Steuereinheiten, speicherprogrammierbare Steuerung, Computereinheiten, Feldgeräte, etc.) einer Anlage softwarebasierte Engineering-Werkzeuge eingesetzt. Je nach Leistungsumfang gibt es softwarebasierte Anwendungen, welche stationär auf einem Personal Computer (PC) oder z.B. für ein verteiltes Arbeiten auf mehreren PCs installiert sind bzw. betrieben werden. Üblicherweise sind umfangärmere bzw. spezialisierte Anwendungen nur auf einem PC installiert. In jüngerer Zeit werden Varianten der softwarebasierten Engineering-Werkzeuge auch als Applikationen für mobile Endgeräte (z.B. Handheld, Tablet, Smartphone, etc.) verfügbar gemacht, wobei wegen des geringeren Speicherplatzes und der geringeren Rechnerleistung der mobilen Endgeräte der Leistungsumfang des jeweiligen Engineering-Werkzeugs eingeschränkt werden muss. Weiterhin gewinnen im Zuge des so genannten Cloud Computings, welches eine Bereitstellung von IT-Infrastruktur (z.B. Speicherplatz, Rechenleistung, Anwendungssoftware) als Dienstleistung über das Internet beschreibt, Anwendungen an Bedeutung, welche auf gegebenenfalls verteilten Rechnereinheiten (z.B. Servern) betrieben werden und deren Funktionsumfang einem Nutzer online bzw. über das Internet zur Verfügung gestellt wird.

Bei der Entwicklung von softwarebasierten Anwendungen für Automatisierungskomponenten muss meist genau festgelegt werden, auf welchen Zielsystemen (z.B. stationäre und/oder verteilte Endgeräte, mobile Endgeräte, Cloud Computing) und vor allem auf welchen Betriebssystemen (z.B. Windows, Linux, OS X, Unix, etc.) die jeweilige Anwendung bzw. Applikation betrieben werden soll. Das weist den Nachteil auf, dass beispielsweise Anwendungen bzw. Applikationen mit identem Leistungsumfang nicht auf unterschiedlichen Plattformen betrieben bzw. für unterschiedliche Zielsysteme zur Verfügung gestellt werden können. D.h. die jeweilige Anwendung muss an das entsprechende Zielsystem und/oder Betriebssystem sowie entsprechend der zu administrierenden Automatisierungskomponente angepasst werden. Weiterhin ist z.B. bei einem Plattformwechsel oder Änderungen im Betriebssystem zumindest eine entsprechende Anpassung der jeweiligen Anwendung oder Applikation notwendig.

Aus der Automatisierungstechnik sind Konzepte wie z.B. Field Device Tool (FDT), durch welches eine Parametrierung von Feldgeräten unterschiedlicher Hersteller mit nur einer softwarebasierten Anwendung ermöglicht wird, oder Field Device Integration (FDI) bekannt, welche im Beitrag "FDI Device Integration - Best of Both Worlds" atp edition 6/2010, Seite 16 bis 19 beschrieben ist und mit welchem Feldgeräte in einer Automatisierungsanlage möglichst plattformunabhängig integrierbar sind. Die FDI-Technologie basiert auf einer Client-Server-Architektur, in welcher die Feldgeräte zentral mittels einer zentralen Recheneinheit - einem Server - verwaltet werden. Dabei ist auf diesem Server eine Konfiguration jedes Feldgeräts innerhalb einer Topologie der Anlage abgelegt. Für eine tatsächliche Konfiguration der Feldgeräte ist ein Konfigurationswerkzeug vorgesehen, welches dazu eingerichtet ist, die Konfiguration der Feldgeräte bzw. der FDI-Clients zu verwalten. Dabei werden Änderungen zuerst an den Server geschrieben und dann das jeweilige Feldgerät übertragen, wobei eine bestehende Kommunikationsverbindung zwischen Server und Feldgerät bzw. FDI-Client notwendig ist und gegebenenfalls eine relativ hohe Belastung des jeweiligen Feldgeräts durch die Datenübertragung anfallen kann. Weiterhin ist das FDI-Konzept vor allem auf Feldgeräte beschränkt.

Weiterhin ist aus der Schrift DE 10 2008 019 040 A1 eine Verfahren und System zur vereinfachten und verbesserten Handhabung, insbesondere Konfiguration, von Automatisierungssystem, insbesondere Steuergeräten bzw. speicherprogrammierbaren Steuerungen (SPS) bekannt. Dazu werden im Steuergerät ein Steuermodul sowie Schnittstellenmodule bereitgestellt, wobei durch die Schnittstellenmodule eine Datenübertragung zu einer Ein-/Ausgabeeinrichtung ermöglicht wird, um eine Steuerfunktion auf dem Steuergerät zu erstellen, zu bearbeiten und/oder auszuführen und Parameter an das Steuergerät zu übergeben und/oder Prozessdaten auszulesen. Die in der Schrift DE 10 2008 019 040 A1 beschriebene Anwendung basiert ebenfalls auf einer Server-Client-Architektur, wobei eine Server-Anwendung auf dem Steuergerät und eine Client-Anwendung als Web-Client auf der Ein-/Ausgabeeinrichtung abläuft. Das beschriebene System weist damit den Nachteil auf, dass die Server-Anwendung direkt auf dem Steuergerät ausgeführt wird, wodurch das Steuergerät eine hohe Datenkomplexität aufweist und durch Datenkommunikation und Datenverarbeitung zusätzlich belastet wird. Weiterhin besteht durch die gewählte Server-Client-Architektur eine Einschränkung auf eine Beziehung von einer Server-Anwendung am Steuergerät zu einer bzw. zu nur sehr wenigen Client-Anwendungen. Bei einem Zugriff von mehreren Client-Anwendungen kann es zu einer Überlastung der Server-Anwendung bzw. des Steuergeräts kommen, da die Kommunikationsressourcen von Automatisierungskomponenten meist auf die in der jeweiligen Anlage notwendige bzw. dem Einsatzbereich entsprechende Funktionalität zugeschnitten sind. Für eine weitere Kommunikation wie z.B. mit Konfigurationsanwendungen, etc. sind meist nur Reserveressourcen verfügbar.

Für Stromversorgungskomponenten wie z.B. elektrische Stromversorgungen und/oder Schaltnetzteile, elektrische Sicherungen, Messeinheiten, etc. sind im Gegensatz zu Automatisierungskomponenten (z.B. Steuergeräte, speicherprogrammierbare Steuerungen, Feldgeräte, etc.) kaum entsprechende Anwendungen und Applikationen zur Konfiguration, Steuerung und Überwachung bekannt. Aus den Schriften WO2015/197689A1 und WO2015/197684A1 sind beispielsweise ein Schaltnetzteil mit Webschnittstelle zur Anbindung an ein Kommunikationsnetzwerk sowie ein Verfahren zur Fernkonfiguration eines Schaltnetzteils zum Einsatz in Industrieanlagen bekannt. Die in diesen beiden Schriften beschriebene Lösung basiert darauf, dass die Stromversorgungskomponente bzw. das Schaltnetzteil einen Webserver aufweist, welcher genutzt wird, um Daten (z.B. Betriebsparameter, Prozessdaten, etc.) über einen Web-Browser auf einer Konfigurationseinheit (z.B. PC, mobiles Endgerät) zu konfigurieren, ändern und/oder zu steuern.

Bei industriellen Stromversorgungskomponenten spielt üblicherweise der Wirkungsgrad eine signifikante Rolle. Daher ist eine Auswahl an in den Stromversorgungskomponenten verbauten Rechen- und Kommunikationseinheiten (z.B. Prozessoren, Ein-/Ausgabebandbreite, etc.) sowie eine Bemessung der Speicherkapazität beschränkt. Weiterhin besteht für die Auswahl der genutzten, elektronischen Bauteile ein hoher Kostendruck. Daher werden die Ressourcen für Datenverarbeitung und Datenkommunikation bei Stromversorgungskomponenten üblicherweise auf die Kernaufgaben abgestimmt. Für weiterführende Kommunikationsaufgaben (z.B. Datenaustauch mit der Web-Browser-Anwendung, Zugriff auf den Webserver, etc.) werden in Stromversorgungskomponenten meist nur Reserveressourcen zur Verfügung gestellt.

Damit weisen die in den beiden Schriften WO2015/197689A1 und WO2015/197684A1 beschriebene Lösungen als wesentlichen Nachteil auf, dass für jeden Web-Browser eine Kommunikationsverbindung zur Stromversorgungskomponente geöffnet werden muss.

Dies kann zu einer starken kommunikationstechnischen Belastung in der Stromversorgungskomponente führen.

Aus der WO 2005/107035 A1 ist weiterhin eine Vorrichtung zur Stromversorgung bekannt, die mehrere Stromversorgungskomponenten aufweist. Die Stromversorgungskomponenten sind jeweils mit einer Kommunikationsschnittstelle versehen und über diese Kommunikationsschnittstelle und einen Kommunikationskanal mit einer gemeinsamen Analyse- und Steuereinheit verbunden. Die Analyse- und Steuereinheit steuert ein Lastmanagement der Stromversorgungskomponenten.

Die WO 2015/169355 A1 offenbart eine Vorrichtung sowie ein Verfahren für konsistente Mengenoperationen datenveränderter OPC UA-Aufrufe. Dabei wird eine Kommunikation zwischen Client und Server eines Client-/Server-Systems unter Verwendung des Kommunikationsprotokolls OPC-UA durchgeführt.

Dabei werden für die Interaktion zwischen Client und Server OPC-UA-Serveraufrufe verwendet und logisch zusammenhängende OPC-UA-Serveraufrufe durch einen Client zu einer Serveraufruf-Menge zusammengefasst, wobei die einzelnen OPC-UA Serveraufruf der Serveraufruf-Menge voneinander unabhängig übertragen werde.

### Darstellung der Erfindung

Der Erfindung liegt daher die Aufgabe zugrunde, ein Steuerungssystem sowie ein zugehöriges Verfahren anzugeben, durch welche Stromversorgungskomponenten in industriellen Anlagen plattformunabhängig, flexibel und auf einfache sowie kostengünstige Weise konfigurierbar, steuerbar und überwachbar sind, und welche eine möglichst geringe Belastung durch Datenübertragung und Datenverarbeitung für die jeweiligen Stromversorgungskomponenten aufweisen.

Diese Aufgabe wird durch Steuerungssystem sowie ein zugehöriges Verfahren der eingangs genannten Art mit den Merkmalen gemäß den unabhängigen Patentansprüchen gelöst. Vorteilhafte Ausführungsformen der vorliegenden Erfindung sind in den abhängigen Ansprüchen beschrieben.

Erfindungsgemäß erfolgt die Lösung der Aufgabe durch ein Steuerungssystem für Stromversorgungskomponenten von zumindest einer Anlage, von welchen eine Energieversorgung von Steuer- und/oder Computereinheiten der zumindest einen Anlage überwacht und gesteuert und damit sichergestellt wird. Dieses Steuerungssystem umfasst eine zentrale Servereinheit, Clienteinheiten sowie lokale Servereinheiten. Der zentralen Servereinheit ist eine Datenbank zum Abspeichern spezifischer Daten und/oder Parameter der jeweiligen Stromversorgungskomponenten wie z.B. Geräteinformationen, Konfigurationsparameter, Versionsdaten, etc. zugeordnet. Die Clienteinheiten sind zur Kommunikation mit den Stromversorgungskomponenten bzw. mit den lokalen Servereinheiten und zur Übertragung der spezifischen Daten und/oder Parameter von und zu den Stromversorgungseinheiten eingerichtet. Dazu ist für jede über ein Kommunikationsnetz angeschlossene und identifizierte Stromversorgungskomponente eine eigene Clienteinheit generierbar. Die lokalen Servereinheiten sind den jeweiligen Stromversorgungskomponenten fest zugeordnet und für eine Kommunikation mit den jeweiligen Clienteinheiten eingerichtet.

Der Hauptaspekt der erfindungsgemäß vorgeschlagenen Lösung besteht darin, dass durch eine entsprechende Kommunikations- und Datenverarbeitungsarchitektur des erfindungsgemäßen Steuerungssystems eine Belastung der Stromversorgungskomponenten durch Datenkommunikation und Datenverarbeitung möglichst gering gehalten wird. In der zentralen Servereinheit bzw. in der zugeordneten Datenbank ist ein Abbild der jeweiligen spezifischen Daten und/oder Parameter der in zumindest einer Anlage verwendeten Stromversorgungskomponenten realisiert, auf welches für Konfiguration, Administration, Steuerungs- und Überwachungszwecke weitgehend uneingeschränkt zugegriffen werden kann. Eine Datenübertragung bzw. Kommunikation mit den jeweiligen Stromversorgungskomponenten, welche mit dem Steuerungssystem über ein Kommunikationsnetz verbunden und identifiziert sind, wird mittels der jeweiligen für die jeweiligen Stromversorgungseinheiten generierten Clienteinheiten auf wenige notwendige Zugriffe eingeschränkt - insbesondere um die Daten und/oder Parameter zwischen lokalen Servereinheiten bzw. Stromversorgungskomponenten und der der zentralen Servereinheit zugeordneten Datenbank konsistent zu halten. Die zentrale Servereinheit mit der zugeordneten Datenbank weist damit die Wirkung eines "Datendrehkreuzes" auf, durch welches virtuelle Instanzen der jeweiligen Stromversorgungskomponenten dargestellt werden und die kommunikations- und datentechnische Belastung der einzelnen Stromversorgungskomponente erheblich reduziert wird.

Die Kombination aus zentraler Servereinheit, Clienteinheiten, welche für jede identifizierte Stromversorgungskomponente generierbar sind und von welchen die Kommunikation mit der jeweiligen Stromversorgungskomponente bzw. der jeweils fix zugeordneten lokalen Servereinheit übernehmen, und lokalen Servereinheiten, welche den Stromversorgungskomponenten fix zugeordnet sind, ermöglicht eine weitgehend plattform- und geräteunabhängige sowie flexible Ausgestaltung des Steuersystems. Das Steuersystem kann damit ohne funktionale Einschränkungen auf verschiedenen Hardwarearchitekturvarianten (z.B. stationäres PC-System, verteiltes Rechnersystem, Cloud Computing) ablaufen.

Weiterhin wird durch die Kommunikations- und Datenverarbeitungsarchitektur des erfindungsgemäßen Steuerungssystems eine freiskalierbare Server-Client-Beziehung, idealerweise eine n-zu-m-Beziehung, ermöglicht. Durch den Einsatz der zentralen Servereinheit wird eine 1-zu-1-Beziehung zwischen generierbaren Clienteinheiten und Stromversorgungskomponenten bzw. den jeweils diesen fix zugeordneten Servereinheiten aufgelöst. Für Konfiguration, Administration, Steuerungs- und Überwachungszwecke wird auf die zentrale Servereinheit zugegriffen - z.B. mittels Client-Applikationen, deren Anzahl beispielsweise durch Konfiguration, Kapazität, etc. der zentralen Servereinheit vorgegeben sein kann und deren Anzahl damit unabhängig von der Anzahl der identifizierten und mittels dem erfindungsgemäßen Steuerungssystem gesteuerten und überwachten Stromversorgungskomponenten ist.

Eine zweckmäßige Weiterbildung der Erfindung sieht vor, dass weiterhin eine zumindest eine Ein-/Ausgabeeinheit anbindbar ist. Über diese zumindest eine Ein-/Ausgabeeinheit sind die spezifischen Daten und/oder Parameter für die jeweiligen Stromversorgungskomponenten eingebbar, ausgebbar und/oder änderbar. Idealerweise erfolgt die Anbindung der zumindest einen Ein-/Ausgabeeinheit mittels einer Applikation, insbesondere Webapplikation. Eingabe, Ausgabe und/oder Änderung der spezifischen Daten und/oder Parameter für die jeweiligen Stromversorgungskomponenten sind mittels eines Webbrowser durchführbar, wobei in vorteilhafter Weise ein standardisierter Internet- oder Webbrowser als Benutzerschnittstelle für die zumindest eine Ein-/Ausgabeeinheit einsetzbar ist. Dadurch können beispielsweise ohne zusätzlichen Aufwand bzw. ohne Einschränkungen in der Funktion ein stationärer PC, stationäre PC-Systeme und mobile Endgeräte (z.B. Tablet-PC, Handheld, etc.) für die Ein-/Ausgabeeinheit bzw. als für eine Anzeige einer Benutzeroberfläche genutzt werden. Weiterhin ist eine Nutzung im Rahmen von so genannten Cloud Computing möglich, über welches beispielsweise die Ein-/Ausgabeeinheit bzw. die Anzeige der Benutzeroberfläche sowie ein Zugriff auf die Funktionalitäten des erfindungsgemäßen Steuerungssystems, insbesondere auf die zentrale Servereinheit, mittels Anwendung zur Verfügung gestellt werden.

Es ist vorteilhaft, wenn die Eingabe, die Ausgabe und/oder Änderungen von spezifischen Daten und/oder Parametern für die Stromversorgungskomponenten über die Ein-/Ausgabeeinheit online und off-line vornehmbar sind. Bei on-line ausgeführten Ein-/Ausgaben und/oder Änderungen von Daten und/oder Parametern mittels Ein-/Ausgabeeinheit besteht eine Kommunikationsverbindung zwischen der jeweiligen Stromversorgungskomponente bzw. der lokalen, der jeweiligen Stromversorgungskomponente fix zugeordneten Servereinheit und der jeweiligen Clienteinheit. Off-line bedeutet, dass bei den jeweiligen Ein-/Ausgaben und/oder Änderungen von Daten oder Parametern keine Kommunikationsverbindung zwischen Clienteinheit und jeweiliger Stromversorgungskomponente bzw. der zugeordneten lokalen Servereinheit existiert oder noch keine Clienteinheit für die entsprechende Stromversorgungskomponente generiert wurde. Bei einem Off-line-Betrieb wird über die Ein-/Ausgabeeinheit nur auf die zentrale Servereinheit bzw. die entsprechenden Daten/Parameter aus der zugeordneten Datenbank zugegriffen. Im Off-line-Betrieb können z.B. ohne Daten- und Kommunikationsbelastung von Stromversorgungskomponenten einer Anlage oder in einer Anlagenplanungsphase, in welcher z.B. die Typen der Stromversorgungskomponenten ausgewählt, aber die Stromversorgungskomponenten selbst physisch noch nicht vorhanden sind, beispielsweise Konfigurationen für Stromversorgungskomponenten einer Anlage geplant, vorbereitet, verifiziert, auf Fehler, Zulässigkeit und Inkonsistenzen überprüft und gegebenenfalls simuliert werden.

Es ist günstig, wenn für ein Generieren der jeweiligen Clienteinheiten Vorlageeinheiten, so genannte Templates, vorgesehen sind. Diese Vorlageeinheiten stellen eine Art "Gerüst" für die jeweiligen Clienteinheiten dar, wobei ein Teil der jeweiligen Datenstruktur und funktionalen Ausgestaltung bereits vorgegeben wird. Fehlende Anteile wie z.B. aktuelle und für die jeweils identifizierte Stromversorgungskomponente spezifische Daten, Parameter und Strukturen werden beim Generieren der Clienteinheit ergänzt. Dadurch kann die jeweilige Clienteinheit bei Identifikation einer Stromversorgungskomponente rasch dynamisch generiert werden und die Belastung der jeweiligen Stromversorgungskomponente durch Datenkommunikation, etc. gering gehalten.

Eine zweckmäßige Ausgestaltung des erfindungsgemäßen Steuerungssystems sieht vor, dass weiterhin eine Gateway-Einheit - d.h. eine Vermittlungseinheit - vorgesehen ist, welcher eine lokale Servereinheit zugeordnet ist. Über die Gateway-Einheit sind Stromversorgungskomponenten mittels einer seriellen Schnittstelle für Punkt-zu-Punkt-Verbindungen wie z.B. USB-Schnittstelle, binärer Schnittstelle, etc. anbindbar. Für die Kommunikation mit der lokalen, der Gateway-Einheit fest zugeordneten Servereinheit ist eine Clienteinheit generierbar, von welcher damit mit der über die Gateway-Einheit angebundene Stromversorgungskomponente unter Nutzung der Gateway-Einheit kommuniziert wird. Damit können durch das erfindungsgemäße Steuerungssystem ohne großen Aufwand auch Stromversorgungskomponenten gesteuert und überwacht werden, welche beispielsweise keine geeignete Schnittstelle (z.B. RJ45-Schnittstelle) für eine direkte Anbindung an das genutzte Kommunikationsnetz (z.B. Ethernet) aufweisen, sondern nur eine serielle Schnittstelle für Punkt-zu-Punkt-Verbindungen. Als serielle Schnittstelle für Punkt-zu-Punkt-Verbindungen kann beispielsweise für eine schnelle Datenübertragung zwischen der Stromversorgungskomponente und der Gateway-Einheit eine USB-Schnittstelle genutzt werden. Bei einer Übertragung von quasistatischen (d.h. sich langsam ändernden digitalen) und nicht zeitkritischen Signalen kann eine Anbindung der Stromversorgungskomponente beispielsweise mittels einer binären Schnittstelle bzw. I/O-Schnittstelle erfolgen. Die Übertragung derartiger Signale wie z.B. von einfachen Messwerten, Signalständen, etc. kann z.B. mehrere Sekunden in Anspruch nehmen.

Eine zweckmäßige Weiterbildung des erfindungsgemäßen Steuerungssystems sieht vor, dass die zentrale Servereinheit und/oder die der zentralen Servereinheit zugeordnete Datenbank und/oder die Clienteinheiten mittels so genanntem Cloud Computing bereitstellbar sind. Bei Cloud Computing wird IT-Infrastruktur wie z.B. Speicherplatz, Rechenleistung oder Anwendungen als Dienstleistung über das Internet zur Verfügung gestellt. Das bietet den Vorteil, dass beispielsweise die Funktionalitäten des erfindungsgemäßen Steuersystems über das Internet als Dienstleistung z.B. Anlagenbetreibern kostengünstig angeboten werden können oder z.B. von einem Anlagenbetreiber mittels einer so genannten privaten Cloud-Umgebung für z.B. mehrere Anlagen ortsunabhängig genutzt werden können.

Idealerweise ist die Kommunikation zwischen Clienteinheiten und den lokalen Servereinheiten, welche den Stromversorgungskomponenten fest zugeordnet sind, mittels einer sogenannten OPC-UA-Schnittstelle durchführbar. OPC Unified Architecture oder kurz OPC-UA ist ein industriell genutzter Machine-to-Machine-Kommunikationsstandard bzw. ein industrielles Machine-to-Machine-Kommunikationsprotokoll, welches die Fähigkeit aufweist, maschinen- bzw. gerätespezifische Daten und/oder Parameter (z.B. Regelgrößen, Messwerte, Parameterwerte, etc.) nicht nur zu transportieren, sondern auch maschinenlesbar zu beschreiben. Die Nutzung einer OPC-UA-Schnittstelle für die Kommunikation bietet die Vorteile eines offenen, hersteller- und geräteunabhängigen Standards, mit welchem unterschiedliche Stromversorgungskomponenten angebunden werden können. Weiterhin beinhaltet OPC-UA mit Authentifizierung und Autorisierung, Verschlüsselung und Datenintegrität durch Signieren entsprechende Sicherheit und Schutz vor Manipulationen bei der Datenübertragung zwischen den Clienteinheiten und den lokalen Servereinheiten bzw. Stromversorgungskomponenten.

Weiterhin ist es vorteilhaft, wenn für einen Zugang zu den spezifischen Daten und/der Parametern bzw. für eine Abfrage der spezifischen Daten und/oder Parameter der Stromversorgungskomponenten eine Authentifizierung vorgesehen ist, wobei ein Umfang an angezeigten Daten und/oder zulässige Veränderungs- und Konfigurationsmöglichkeiten durch unterschiedliche Nutzerrollen definierbar sind. Damit wird der Zugang mittels der Ein-/Ausgabeeinheit bzw. der Zugriff auf die zentrale Servereinheit und die zugeordnete Datenbank vor unberechtigten Zugriffen und Manipulationen geschützt. Weiterhin können durch Definition unterschiedlicher Nutzerrollen unterschiedliche Sichten auf der Ein-/Ausgabeeinheit bzw. mittels parallel ablaufender Applikationen auf die Daten und/oder Parameter bzw. Konfigurationen derselben Stromversorgungskomponenten angeboten werden.

Die Lösung der angegebenen Aufgabe erfolgt weiterhin durch ein zugehöriges Verfahren zur Inbetriebnahme, Steuerung und Überwachung von Stromversorgungskomponenten zumindest einer Anlage. Von den Stromversorgungskomponenten wird eine Energieversorgung von Steuer- und/oder Computereinheiten der zumindest einen Anlage überwacht und gesteuert. Das erfindungsgemäße Verfahren wird vom erfindungsgemäßen Steuerungssystem durchgeführt bzw. läuft auf diesem ab und weist zumindest die folgenden Schritte auf:
- Ansprechen von Stromversorgungskomponenten mittels eines Identifikationsaufrufs, welche über ein Kommunikationsnetz mit dem erfindungsgemäßen Steuerungssystem verbunden sind;
- Zurücksenden einer Antwortnachricht mit eindeutigen Identifikationsdaten der jeweiligen Stromversorgungskomponente durch lokale Servereinheiten, welche den jeweiligen Stromversorgungskomponenten fest zugeordnet sind;
- Generieren einer Clienteinheit für jede identifizierte Stromversorgungskomponente, wobei von der jeweiligen Clienteinheit eine Kommunikation mit der lokalen, der jeweiligen Stromversorgungskomponenten zugeordneten Servereinheit durchgeführt wird; und
- Übertragen der eindeutigen Identifikationsdaten der jeweiligen Stromversorgungskomponente durch die jeweilige Clienteinheit an eine zentrale Servereinheit und Abspeichern der eindeutigen Identifikationsdaten als spezifische Daten und/oder Parameter der jeweiligen Stromversorgungskomponente in der der zentralen Servereinheit zugeordneten Datenbank.

Der Hauptaspekt des erfindungsgemäßen Verfahrens besteht ebenfalls darin, dass durch den Verfahrensablauf einerseits eine Belastung der Stromversorgungskomponenten durch Datenkommunikation und Datenverarbeitung relativ gering gehalten wird. Andererseits wird ein Verfahren zur Verfügung gestellt, durch welches mit den zu den jeweils identifizierten Stromversorgungskomponenten generierten Clienteinheiten eine Verbindung zu der zentralen Servereinheit und der zugeordneten Datenbank aufgebaut wird. In der zentralen Servereinheit bzw. in der zugeordneten Datenbank wird ein Abbild der jeweiligen spezifischen Daten und/oder Parameter der in zumindest einer Anlage verwendeten Stromversorgungskomponenten realisiert, auf welches für Konfiguration, Administration, Steuerungs- und Überwachungszwecke weitgehend uneingeschränkt z.B. mittels Ausgabe-Anwendungen zugegriffen werden kann. D.h. durch das erfindungsmäßige Verfahren wird eine freiskalierbare Server-Client-Beziehung, idealerweise eine n-zu-m-Beziehung, ermöglicht, bei welcher parallel mehrere und gegebenfalls unterschiedliche Sichten auf dieselben Stromversorgungskomponenten möglich sind. Die zentrale Servereinheit mit der zugeordneten Datenbank fungiert dabei als eine Art "Datendrehkreuz", durch welches virtuelle Instanzen der jeweiligen Stromversorgungskomponenten dargestellt werden und die kommunikations- und datentechnische Belastung der einzelnen Stromversorgungskomponente erheblich reduziert wird.

Es ist vorteilhaft, wenn zum Generieren der Clienteinheit für eine jeweils identifizierte Stromversorgungskomponente eine Vorlageeinheit herangezogen wird. Um die jeweiligen Clienteinheiten für die identifizierten Stromversorgungskomponenten auf einfache und rasche Weise dynamisch generieren zu können, können z.B. für verschiedene häufige genutzte Typen von Stromversorgungskomponenten (z.B. unterbrechungsfreie Stromversorgung, etc.) spezielle Vorlageeinheiten als eine Art "Gerüst" genutzt werden. Dabei wird ein Teil der jeweiligen Datenstruktur und funktionalen Ausgestaltung bereits vorgegeben. Fehlende Anteile wie z.B. aktuelle und für die jeweils identifizierte Stromversorgungskomponente spezifische Daten, Parameter und Strukturen werden beim Generieren der Clienteinheit ergänzt und die Belastung der Stromversorgungskomponente durch Datenkommunikation, etc. gering gehalten.

Weiterhin ist es günstig, wenn bei bestehender Kommunikationsverbindung zwischen der jeweiligen Clienteinheit und der lokalen, der jeweiligen Stromversorgungskomponente zugeordneten Servereinheit und nach entsprechender Authentifizierung spezifische Daten und/oder Parameter der jeweiligen Stromversorgungskomponente auf einer Ein-/Ausgabeeinheit ausgegeben werden. Bei entsprechender Nutzerrolle können dann die spezifischen Daten und/oder Parameter der jeweiligen Stromversorgungskomponente geändert werden. Die jeweils geänderten, spezifischen Daten und/oder Parameter werden dann über die zentrale Servereinheit und die jeweilige Clienteinheit an die lokale, der jeweiligen Stromversorgungskomponente zugeordnete Servereinheit weitergeleitet, um dort von der lokalen, der jeweiligen Stromversorgungskomponente zugeordneten Servereinheit verarbeitet und/oder lokal abgespeichert zu werden. Weiterhin werden die geänderten Daten und/oder Parameter - üblicherweise nach erfolgreicher Weiterleitung und Verarbeitung durch die jeweilige lokale Servereinheit - in der der zentralen Servereinheit zugeordneten Datenbank abgespeichert.

Bei einer zweckmäßigen Ausgestaltung des erfindungsgemäßen Verfahrens werden lokale Änderungen von spezifischen Daten und/oder Parametern der jeweiligen Stromversorgungskomponente - d.h. Änderungen, welche beispielsweise direkt an der Stromversorgungskomponente z.B. manuell oder mittels einer lokal angebundenen Anzeigeeinheit vorgenommen werden - bei einer bestehenden Kommunikationsverbindung zwischen der jeweiligen Clienteinheit und der lokalen, der jeweiligen Stromversorgungskomponente von der lokalen, der jeweiligen Stromversorgungskomponente zugeordneten Servereinheit an die jeweils zugehörige Clienteinheit gesendet. Die gesendeten spezifischen Daten und/oder Parameter werden dann nach Weiterleitung durch die jeweilige Clienteinheit in der der zentralen Servereinheit zugeordneten Datenbank abgespeichert. Auf diese Weise wird sehr einfach sichergestellt, dass die Datenhaltung in der Datenbank, welche der zentralen Servereinheit zugeordnet ist, keine Inkonsistenzen bzw. Abweichungen gegenüber den lokal in den Stromversorgungskomponenten gespeicherten Daten und/Parametern aufweist.

Idealerweise wird bei lokaler Änderung von spezifischen Daten und/oder Parametern einer Stromversorgungskomponente eine Benachrichtigung von der lokalen, der jeweiligen Stromversorgungskomponente zugeordneten Servereinheit an die jeweilige Clienteinheit gesendet. Damit ist der jeweiligen Clienteinheit sowie über die Clienteinheit der zentralen Servereinheit bekannt, dass bei einer Stromversorgungskomponente lokale Änderungen vorgenommen worden sind. Es kann beispielsweise eine Übertragung der Änderungen an die Clienteinheit bzw. an die zentrale Servereinheit entsprechend geplant werden, um eine Belastung durch Kommunikation und Datenübertragung für die jeweilige Stromversorgungskomponente möglichst gering zu halten.

Es ist von Vorteil, wenn bei bestehender Kommunikationsverbindung zwischen der jeweiligen Clienteinheit und der lokalen, der jeweiligen Stromversorgungskomponente zugeordneten Servereinheit die Stromversorgungskomponente als "on-line" kennzeichnet wird. Damit ist auf einfache Weise ersichtlich, welche Stromversorgungskomponenten über einen aktive Kommunikationsverbindung zur jeweiligen Clienteinheit und damit zur zentralen Servereinheit aufweisen.

Es ist weiterhin günstig, wenn bei einer Unterbrechung der bestehenden Kommunikationsverbindung zwischen der jeweiligen Clienteinheit und der lokalen, der Stromversorgungskomponente zugeordneten Servereinheit ein Alarm ausgesendet wird. Damit wird auf einfache Weise eine Unterbrechung der Kommunikationsverbindung angezeigt.

Eine weitere, zweckmäßige Ausgestaltung des erfindungsgemäßen Verfahrens sieht vor, dass ohne bestehende Kommunikationsverbindung zwischen lokalen, den jeweiligen Stromversorgungskomponenten zugeordneten Servereinheiten und den zugehörigen Clienteinheiten Änderungen der spezifischen Daten und/oder Parameter der Stromversorgungskomponenten, welche über die Ein-/Ausgabeeinheit vorgenommen werden, in der der zentralen Servereinheit zugeordneten Datenbank abgespeichert werden. Erst bei einer bestehenden Kommunikationsverbindung zwischen lokalen, den jeweiligen Stromversorgungskomponenten zugeordneten Servereinheiten und den jeweiligen Clienteinheiten werden die Änderung der Daten und/oder Parameter an die jeweiligen lokalen, den jeweiligen Stromversorgungskomponenten zugeordneten Servereinheiten übertragen. Damit können in einem Off-line-Betrieb beispielsweise Konfigurationen von Stromversorgungseinheiten für neue Anlagen und/oder Umbauten von Anlagen oder z.B. Versionsänderungen der so genannten Firmware von Stromversorgungskomponenten, etc. vorbereitet werden. Bei bestehender Kommunikationsverbindung werden diese Änderungen dann an die jeweiligen lokalen, den jeweiligen Stromversorgungskomponenten zugeordneten Servereinheiten übertragen. Eine jeweilige Belastung der jeweiligen Stromversorgungskomponente durch die Übertragung kann damit sehr einfach berücksichtigt werden.

Eine zweckmäßige Ausgestaltung des erfindungsgemäßen Verfahrens sieht vor, dass für die bestehende Kommunikationsverbindung zwischen den lokalen, den jeweiligen Stromversorgungskomponenten zugeordneten Servereinheiten und den zugehörigen Clienteinheiten eine so genannte OPC-UA-Schnittstelle für einen Datenaustausch eingesetzt wird. Durch den Einsatz einer OPC-UA-Schnittstelle für die Kommunikation zwischen Clienteinheiten und den lokalen, den jeweiligen Stromversorgungskomponenten zugeordneten Servereinheiten wird eine Kommunikation nach einem offenen, hersteller- und geräteunabhängigen Standard ermöglicht. Weiterhin bietet OPC-UA eine entsprechende Sicherheit für die Datenübertragung und einen gewissen Schutz vor Manipulation durch Authentifizierung und Autorisierung, Verschlüsselung und Datenintegrität durch Signieren z.B. mittels der spezifischen Firmware der jeweiligen Stromversorgungskomponente.

Idealerweise wird für ein Versenden des Identifikationsaufrufs das so genannte Discovery and Configuration Protocol (DCP) verwendet. Das Discovery and Configuration Protocol oder kurz DCP ist eine Protokolldefinition innerhalb des Kontextes von PROFINET, einem offenen industriellen genutzten Ethernet-Standards, welcher für Automatisierung genutzt wird. Mittels DCP können daher auf einfache Weise mittels eines Kommunikationsnetzes (z.B. Ethernet) angebundene Stromversorgungskomponenten zumindest einer Automatisierungsanlage detektiert bzw. über einen vom erfindungsgemäßen Steuerungssystem gesendeten, so genannten Multicast ermittelt werden.

### Kurzbeschreibung der Zeichnung

Die Erfindung wird nachfolgend in beispielhafter Weise anhand der beigefügten Figuren erläutert. Es zeigen dabei:
Figur 1 schematisch einen beispielshaften, strukturellen Aufbau des erfindungsgemäßen Steuerungssystems für Stromversorgungskomponenten
Figur 2 einen beispielshaften Ablauf des erfindungsgemäßen Verfahrens zur Inbetriebnahme, Steuerung und Überwachung von Stromversorgungskomponenten zumindest einer Anlage
Figur 3 eine beispielshafte Variante des erfindungsgemäßen Verfahrens bei bestehender Kommunikationsverbindung mit den Stromversorgungskomponenten
Figur 4 eine weitere, beispielshafte Variante des erfindungsgemäßen Verfahrens bei bestehender Kommunikationsverbindung mit den Stromversorgungskomponenten
Figur 5 eine beispielshafte Variante des erfindungsgemäßen Verfahrens ohne bestehende Kommunikationsverbindung mit den Stromversorgungskomponenten

### Ausführung der Erfindung

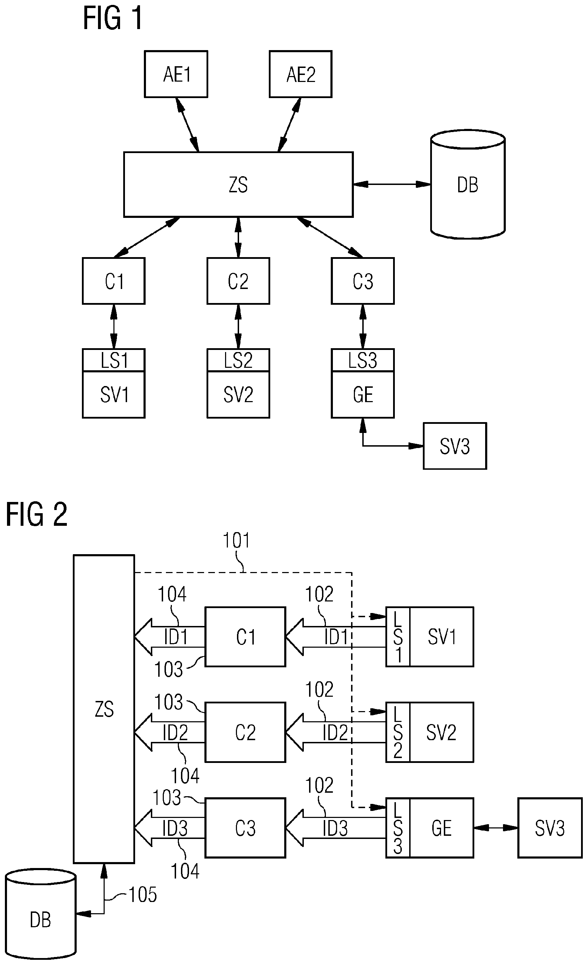

Figur 1 zeigt schematisch und beispielhaft einen strukturellen und funktionalen Aufbau des erfindungsgemäßen Steuerungssystems für beispielhafte Stromversorgungskomponenten SV1, SV2, SV3 von zumindest einer Anlage. Durch Stromversorgungskomponenten SV1, SV2, SV3 (z.B. elektrische Stromversorgungen, Schaltnetzteile, elektrische Sicherungen, Messeinheiten, etc.) wird eine Energieversorgung von Steuer- und/oder Computereinheiten der zumindest einen Anlage überwacht und gesteuert. In der Figur 1 sind drei beispielhafte Stromversorgungskomponenten SV1, SV2, SV3 dargestellt. Dabei weisen beispielsweise eine erste und eine zweite Stromversorgungskomponente SV1, SV2 eine Schnittstelle (z.B. RJ45-Schnittstelle) für eine direkte Anbindung an ein genutztes Kommunikationsnetz, insbesondere Ethernet, auf. Ein dritte Stromversorgungskomponente SV3 weist z.B. nur eine serielle Schnittstelle für eine Punkt-zu-Punkt-Verbindung wie z.B. eine USB-Schnittstelle oder eine binäre Schnittstelle zur Übertragung von quasistatischen Signalen (z.B. nicht zeitkritische oder gering zeitkritische Abfragen von Signalständen, Messwerten, etc.) auf.

Das in Figur 1 beispielhaft dargestellte, erfinderische Steuerungssystem umfasst eine zentrale Servereinheit ZS, welcher ein Datenbank DB zugeordnet ist. In der Datenbank DB können spezifische Daten und/oder Parameter der jeweiligen Stromversorgungskomponenten SV1, SV2, SV3 (z.B. Geräteinformationen, Gerätetype, Adressdaten, Konfigurationsparameter, Versionsdaten der Gerätefirmware, etc.) abgespeichert werden. Die zentrale Servereinheit ZS sowie die zugeordnete Datenbank können beispielsweise auf einer Recheneinheit (z.B. PC, Laptop, etc.) oder einem verteilten Rechnersystem realisiert werden. Die zentrale Servereinheit ZS und/oder die Datenbank DB sind allerdings auch mittels so genannten Cloud Computing z.B. über das Internet oder ein Firmennetz bereitstellbar.

Weiterhin sind Clienteinheiten C1, C2, C3 vorgesehen, welche für eine Kommunikation mit bzw. zur Übertragung der spezifischen Daten und/oder Parameter von und zu der zentralen Servereinheit ZS sowie von und zu den jeweiligen Stromversorgungskomponenten SV1, SV2, SV3 eingerichtet sind. Dabei ist für jede über das genutzte Kommunikationsnetz (z.B. Ethernet) angebundene und identifizierte Stromversorgungskomponente SV1, SV2, SV3 eine eigene Clienteinheit C1, C2, C3 generierbar. So wird beispielsweise für die erste Stromversorgungseinheit SV1 eine erste Clienteinheit C1, für die zweite Stromversorgungseinheit SV2 einen zweite Clienteinheit C2 und für die dritte Stromversorgungseinheit SV3 eine dritte Clienteinheit C3 generiert. Für ein Generieren der Clienteinheiten C1, C2, C3 sind dabei Vorlageeinheiten - so genannte Templates - vorgesehen, welchen zumindest ein Teil der jeweiligen Datenstruktur und der funktionalen Ausgestaltung der jeweiligen Clienteinheit C1, C2, C3 bereits vorgegeben wird. Die Clienteinheiten C1, C2, C3 können beispielsweise auf derselben Recheneinheit oder auf einer anderen Recheneinheit wie die zentrale Servereinheit ZS ablaufen. Weiterhin sind auch die Clienteinheiten C1, C2, C3 mittels so genanntem Cloud Computing bereitstellbar.

Weiterhin umfasst das erfindungsgemäße Steuerungssystem lokale Servereinheiten LS1, LS2, LS3, welche den jeweiligen Stromversorgungskomponenten SV1, SV2, SV3 fest zugeordnet sind. So weisen beispielsweise die erste und zweite Stromversorgungskomponente SV1, SV2, welche eine Schnittstelle zur direkten Anbindung an das genutzte Kommunikationsnetz (z.B. Ethernet) aufweisen, lokale Servereinheiten LS1, LS2 auf, welche z.B. direkt in/auf der Stromversorgungskomponente ablauffähig angebracht sind. Dabei wird von einer ersten lokalen Servereinheit LS1 der ersten Stromversorgungskomponente SV1 mit der ersten Clienteinheit C1 über das genutzte Kommunikationsnetz kommuniziert. Von einer zweiten lokalen Servereinheit LS2 der zweiten Stromversorgungskomponente SV2 wird mit der zweiten Clienteinheit C2 über das Kommunikationsnetz kommuniziert. Für die Kommunikation bzw. Datenübertragung zwischen den jeweiligen lokalen Servereinheiten LS1, LS2 und den jeweiligen Clienteinheit ist beispielsweise eine so genannte OPC-UA-Schnittstelle einsetzbar.

Für eine Anbindung der dritten Stromversorgungskomponente SV3, welche beispielsweise nur eine serielle Schnittstelle für eine Punkt-zu-Punkt-Verbindung (z.B. USB-Schnittstelle, binäre Schnittstelle, etc.) zur Anbindung an das Kommunikationsnetz aufweist, ist eine Gateway-Einheit GE vorgesehen. Der Gateway-Einheit GE ist eine dritte lokale Servereinheit LS3 zugeordnet, von welcher mit der dritten Clienteinheit C3 kommuniziert wird. Die dritte Clienteinheit C3 kommuniziert somit über die Gateway-Einheit GE mit der dritten Stromversorgungskomponente SV3. Für die Kommunikation bzw. Datenübertragung zwischen der dritten Clienteinheit C3 und der dritten lokalen Servereinheit LS3, welche der Gateway-Einheit GE zugeordnet ist, kann beispielweise wieder eine so genannte OPC-UA-Schnittstelle verwendet werden.

Weiterhin ist zumindest eine Ein-/Ausgabeeinheit AE1, AE2 z.B. über ein Kommunikationsnetz (z.B. Internet, Ethernet, drahtloses Kommunikationsnetz bzw. Funknetz, etc.) anbindbar. In der in Figur 1 schematisch und beispielhaft dargestellten Ausführungsform des erfindungsgemäßen Steuerungssystems sind z.B. zwei Ein-/Ausgabeeinheiten AE1, AE2 vorgesehen. Über die Ein-/Ausgabeeinheiten sind spezifische Daten und/oder Parameter für die jeweiligen Stromversorgungskomponenten SV1, SV2, SV3 eingebbar, ausgebbar und/oder veränderbar sowie für Überwachungszwecke abrufbar.

Eine Anbindung der Ein-/Ausgabeeinheiten AE1, AE2 erfolgt mittels einer Applikation, insbesondere einer Webapplikation, von welcher eine Kommunikationsverbindung z.B. über das Internet zur zentralen Servereinheit ZS herstellbar ist und von welcher eine Client-Anwendung zur zentralen Servereinheit ZS gebildet wird. Für Eingabe, Ausgabe bzw. Anzeige und/oder Änderung von spezifischen Daten und/oder Parametern der jeweiligen Stromversorgungskomponente SV1, SV2, SV3 durch bzw. auf einer der Ein-/Ausgabeeinheiten AE1, AE2 wie z.B. einem stationären Desktop-PC, einem mobilen Endgerät (z.B. Tablet-PC, Handheld, Smartphone, etc.) ist ein standardisierter Internet- oder Webbrowser einsetzbar. Die jeweilige angezeigte Ansicht ist dynamisch generierbar auf Basis der für die jeweilige Stromversorgungskomponenten SV1, SV2, SV3 in der Datenbank DB abgelegten spezifischen Daten und/oder Parameter, welche der zentralen Servereinheit ZS zugeordnet ist. Für eine Handhabung des dynamischen Datenaustauschs zwischen zentraler Servereinheit ZS und dem Webbrowser auf der jeweiligen Ein-/Ausgabeeinheit AE1, AE2 können beispielsweise OPC-UA-Methoden und auf dem Kommunikationsprotokoll Hypertext Transfer Protocol Secure (https) verwendet werden.

Für einen Zugang zu bzw. eine Abfrage und/oder Änderung der spezifischen Daten und/oder Parameter der Stromversorgungskomponenten SV1, SV2, SV3 über die Ein-/Ausgabeeinheiten AE1, AE2 ist weiterhin einen Authentifizierung z.B. mittels eines gültigen Nutzernamens und eines Passworts vorgesehen. Weiterhin sind ein Umfang der angezeigten Daten und/oder Parameter sowie zulässige Veränderungs- und Konfigurationsmöglichkeiten von Stromversorgungskomponenten SV1, SV2, SV3 durch unterschiedlich definierte Nutzerrollen vorgebbar. Benutzerspezifische Daten (z.B. Nutzername, Passwort, etc.) sowie definierte Nutzerrollen können z.B. idealerweise verschlüsselt in einem lokalen Nutzerverzeichnis in der der zentralen Servereinheit ZS zugeordneten Datenbank DB abgelegt sein.

Die Eingabe, die Ausgabe bzw. Anzeige und/oder Änderung von spezifischen Daten und/oder Parametern der jeweiligen Stromversorgungskomponenten SV1, SV2, SV3 über die jeweiligen Ein-/Ausgabeeinheiten AE1, AE2 ist in einem On-line-Modus bzw. on-line und in einem Off-line-Modus bzw. off-line vornehmbar. Beim On-line-Modus existiert eine aktive Kommunikationsverbindung zwischen der jeweiligen Clienteinheit C1, C2, C3 und damit der zentralen Servereinheit ZS und den lokalen Servereinheiten LS1, LS2, LS3, welche den Stromversorgungskomponenten SV1, SV2, SV3 zugeordnet sind. Beim Online-Modus können daher z.B. Daten/Parameter direkt von einer Stromversorgungskomponente SV1, SV2, SV3 abgefragt und auf der Ein-/Ausgabeeinheit AE1, AE2 angezeigt bzw. Daten- und/oder Parameteränderungen an die Stromversorgungskomponente SV1, SV2, SV3 direkt über zentrale Servereinheit ZS, Clienteinheit C1, C2, C3 sowie lokale Servereinheit LS1, LS2, LS3 übertragen werden. Im Off-line-Modus besteht keine Kommunikationsverbindung zu den jeweiligen Stromversorgungskomponenten SV1, SV2, SV3 bzw. zu den jeweiligen zugehörigen lokalen Servereinheiten LS1, LS2, LS3. D.h. ein Daten- und/oder Parametertransfer für eine Ausgabe, Eingabe oder Änderung von spezifischen Daten und/oder Parametern der Stromversorgungskomponenten SV1, SV2, SV3 an die Ein-/Ausgabeeinheit AE1, AE2 erfolgt durch die zentrale Servereinheit ZS auf Basis von abgespeicherten Daten und/oder Parametern in der zugeordneten Datenbank DB.

In Figur 2 ist wieder schematisch und beispielhaft das erfindungsgemäße Steuerungssystem dargestellt, wobei vom Steuerungssystem wieder drei beispielshafte Stromversorgungskomponenten SV1, SV2, SV3 überwacht und gesteuert werden. Dabei sind die erste und die zweite Stromversorgungskomponenten SV1, SV2 beispielsweise direkt an das Kommunikationsnetz anbindbar, während die Anbindung der dritten Stromversorgungskomponente SV3 über die Gateway-Einheit GE erfolgt. Um alle an das Kommunikationsnetz (z.B. Ethernet) direkt oder über eine Gateway-Einheit GE angebundenen Stromversorgungskomponenten SV1, SV2, SV3 detektieren zu können, wird vom Steuerungssystem bzw. von der zentralen Servereinheit ZS bei einem Startvorgang 101 ein Identifikationsaufruf ausgesendet. Die an das Kommunikationsnetz angebundenen Stromversorgungskomponenten SV1, SV2, SV3 werden mittels des Identifikationsaufrufs vom Steuerungssystem angesprochen. Für das Versenden des Identifikationsaufrufs - beispielsweise in Form eines so genannten Multicasts - wird z.B. das so genannte Discovery and Configuration Protokoll oder kurz DCP verwendet.

Bei einem Identifikationsvorgang 102 werden von der jeweiligen lokalen Servereinheit LS1, LS2, LS3, welche den jeweiligen Stromversorgungskomponenten SV1, SV2, SV3 fest zugeordnet sind, Antwortnachrichten mit eindeutigen Identifikationsdaten ID1, ID2, ID3 der jeweiligen Stromversorgungskomponenten SV1, SV2, SV3 zurückgesendet. Für Stromversorgungskomponenten wie der beispielhaften dritten Stromversorgungskomponente SV3, welche über eine Gateway-Einheit GE an das Kommunikationsnetz angebunden ist, wird die Antwortnachricht mit den eindeutigen Identifikationsdaten ID3 der dritten Stromversorgungskomponente SV3 von der Gateway-Einheit GE auf Basis von Daten der dritten Stromversorgungskomponente SV3 erstellt und versendet. Die eindeutigen Identifikationsdaten ID1, ID2, ID3 können beispielsweise zumindest eine eindeutige Kennung für die jeweilige Stromversorgungskomponente SV1, SV2 bzw. bei indirekt angebundenen Stromversorgungskomponenten SV3 für die Gateway-Einheit GE (z.B. MAC-Adresse), einen Gerätenamen und/oder -kennung, eine IP-Adresse, etc. umfassen.

Nach dem Identifikationsvorgang 102 wird in einem nächsten Generierungsvorgang 103 für jede identifizierte Stromversorgungskomponente SV1, SV2, SV3 eine Clienteinheit C1, C2, C3 generiert. Von der jeweiligen Clienteinheit C1, C2, C3 wird die Kommunikation mit der jeweiligen lokalen Servereinheit LS1, LS2, LS3 der jeweiligen Stromversorgungskomponente SV1, SV2 bzw. der Gateway-Einheit GE für eine Kommunikation mit der dritten Stromversorgungskomponente SV3 übernommen. Beim Generierungsvorgang 103 werden für das Erstellen der Clienteinheiten C1, C2, C3 beispielsweise Vorlageeinheiten bzw. so genannte Templates herangezogen. Diese Vorlageeinheiten weisen z.B. bereits eine Grundstruktur für die Clienteinheit C1, C2, C3 auf, die für die Kommunikation mit der jeweiligen Stromversorgungskomponente SV1, SV2, SV3 erzeugt wird.

Nach Erzeugen der Clienteinheiten C1, C2, C3 besteht eine Kommunikationsverbindung zu den lokalen Servereinheiten LS1, LS2, LS3, welche den Stromversorgungskomponenten SV1, SV2, SV3 zugeordnet sind, und den Clienteinheiten C1, C2, C3. Die jeweiligen Stromversorgungskomponenten SV1, SV2, SV3 werden daher als "on-line" bezeichnet und können entsprechend (z.B. mittels einer leuchtenden oder blinkenden LED) gekennzeichnet werden. In der Folge kann beispielsweise bei einer Unterbrechung der bestehenden Kommunikationsverbindung zwischen einer Clienteinheit C1, C2, C3 und einer lokalen Servereinheit LS1, LS2, LS3, welche den Stromversorgungskomponenten SV1, SV2, SV3 zugeordnet sind, ein Alarm ausgesendet werden. Für die bestehende Kommunikationsverbindung zwischen Clienteinheiten C1, C2, C3 und den lokalen Servereinheiten SV1, SV2, SV3 wird z.B. einen OPC-UA-Schnittstelle zum Austausch von Daten und/oder Parametern eingesetzt.

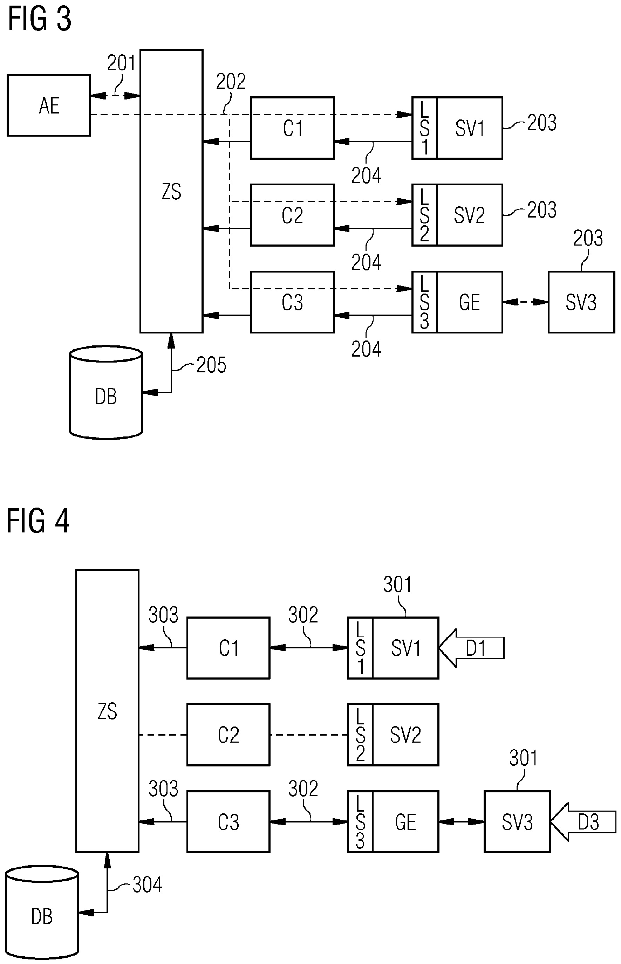

In einem Übertragungsvorgang 104 werden die eindeutigen Identifikationsdaten ID1, ID2, ID3 der jeweiligen Stromversorgungskomponenten SV1, SV2, SV3 von den Clienteinheiten C1, C2, C3 an die zentrale Servereinheit ZS übertragen. In einem Speichervorgang 105 werden dieses Daten ID1, ID2, ID3 dann in der Datenbank DB abgelegt, welche der zentralen Servereinheit ZS zugeordnet ist. Die über das Kommunikationsnetz (z.B. Ethernet, Funknetz, etc.) direkt und indirekt (d.h. via Gateway-Einheit GE) angebundenen Stromversorgungskomponenten SV1, SV2, SV3 sind nun dem Steuerungssystem bekannt und können wie beispielhaft in den Figuren 3 und 4 dargestellt gesteuert und überwacht werden.

Figur 3 zeigt wieder schematisch und beispielhaft das erfindungsgemäße Steuerungssystem, welches nun bestehende Kommunikationsverbindungen zu den drei beispielhaften Stromversorgungskomponenten SV1, SV2, SV3 aufweist. D.h. es bestehen Kommunikationsverbindungen - beispielsweise mittels einer OPC-UA-Schnittstelle - zwischen der ersten und zweiten Clienteinheit C1, C2 und der ersten und zweiten lokalen Servereinheit LS1, LS2 der ersten und zweiten Stromversorgungskomponente SV1, SV2 bzw. zwischen der dritten Clienteinheit C3 und der dritten lokalen Servereinheit LS3 der Gateway-Einheit GE zur Anbindung der dritten Stromversorgungskomponente SV3. Die Stromversorgungskomponenten SV1, SV2, SV3 werden daher als "on-line" bezeichnet.

Über eine Ein-/Ausgabeeinheit AE wird für einen Anzeige- und/oder Änderungsvorgang 201 ein Zugang zur zentralen Servereinheit ZS aufgebaut. Dazu wird beispielsweise auf einem stationären oder mobilen Endgerät eine Client-Anwendung (z.B. externer OPC-UA-Client, Webapplikation, etc.) verwendet. Für die Verbindung zur zentralen Servereinheit ZS und eine Anzeige und/oder Änderung der spezifischen Daten und/oder Parameter der als "on-line" gekennzeichneten Stromversorgungskomponenten SV1, SV2, SV3 wird für den Anzeige und/oder Änderungsvorgang 201 eine entsprechende Authentifizierung z.B. mittels Benutzername und Passwort durchgeführt. Dann werden die als "on-line" gekennzeichneten Stromversorgungskomponenten SV1, SV2, SV3 auf der Ein-/Ausgabeeinheit AE angezeigt. Entsprechend einer Nutzerrolle des jeweiligen Benutzers können Stromversorgungskomponenten SV1, SV2, SV3 ausgewählt werden, um die zugehörigen spezifischen Daten und/oder Parameter auf der Ein-/Ausgabeeinheit AE anzeigen zu lassen und/oder zu ändern, wobei die angezeigten Daten und/oder Parameter von der zentralen Servereinheit ZS und der zugeordneten Datenbank DB geliefert werden.

Bei einer Daten- und/oder Parameteränderung über die Ein-Ausgabeeinheit AE werden in einem Schreibvorgang 202 die geänderten spezifischen Daten und/oder Parameter zuerst an die zentrale Servereinheit ZS und dann an die jeweiligen Clienteinheiten C1, C2, C3 weitergeleitet. Von den jeweiligen Clienteinheiten C1, C2, C3 werden dann die geänderten Daten und/oder Parameter der jeweiligen Stromversorgungskomponente SV1, SV2, SV3 an die jeweiligen lokalen Servereinheiten LS1, LS2, LS3 übertragen. D.h. von der ersten bzw. zweiten Clienteinheit C1, C2 werden z.B. geänderte Daten/Parameter für die erste bzw. zweite Stromversorgungskomponente SV1, SV2 übertragen. Von der dritten Clienteinheit C3 werden geänderte Daten/Parameter für die dritte Stromversorgungskomponente SV3 an die lokale Servereinheit LS3 der Gateway-Einheit GE übertragen, von welcher Weitervermittlung der geänderten Daten/Parameter an die dritte Stromversorgungskomponente SV3 über die Punkt-zu-Punktverbindung (z.B. USB-Schnittstelle, binäre Schnittstelle, etc.) übernommen wird.

In einem Verarbeitungsvorgang 203 werden die geänderten Daten/Parameter von den jeweiligen Stromversorgungskomponenten SV1, SV2, SV3 gespeichert. Nach einer erfolgreichen Weiterleitung und Speicherung der geänderten Daten/Parameter auf den jeweiligen Stromversorgungskomponenten SV1, SV2, SV3 wird bei einem Rückmeldevorgang 204 eine entsprechende Nachricht von der jeweiligen lokalen Servereinheit LS1, LS2, LS3 an die jeweilige Clienteinheit C1, C2, C3 gesendet. Erst nach Erhalt der entsprechenden Nachricht werden die geänderten Daten/Parameter von der jeweiligen Clienteinheit C1, C2, C3 in einem Speichervorgang 205 in die der zentralen Servereinheit ZS zugeordnete Datenbank DB gespeichert. Damit werden die Daten und/oder Parameter der Stromversorgungskomponenten SV1, SV2, SV3 in der Datenbank DB konsistent mit den Daten und/oder Parametern gehalten, welche lokal auf den Stromversorgungseinheiten SV1, SV2, SV3 gespeichert sind. Inkonsistenzen in der Datenhaltung in der Datenbank DB durch Fehler beim Schreibvorgang 202 und/oder beim Verarbeitungsvorgang 203 werden damit vermieden.

Figur 4 zeigt ebenfalls schematisch und beispielhaft das erfindungsgemäße Steuerungssystem, welches bestehende Kommunikationsverbindungen zu den drei beispielhaften Stromversorgungskomponenten SV1, SV2, SV3 aufweist. Bei der in Figur 4 beispielhaft dargestellten Ausführungsvariante werden allerdings in einem Änderungsvorgang 301 bei der ersten und dritten Stromversorgungskomponente SV1, SV3 lokale Änderungen D1, D3 der spezifischen Daten und/oder Parameter (z.B. manuell oder mittels einer lokal an die Stromversorgungskomponente SV1, SV3 angebundenen Ein-/Ausgabeeinheit) vorgenommen. In einem Meldevorgang 302 werden daher z.B. von der ersten Stromversorgungskomponente SV1 mittels der ersten lokalen Servereinheit LS1 die lokal geänderten Daten und/oder Parameter D1 an die erste Clienteinheit gesendet. Die dritte Stromversorgungskomponente SV3 ist beispielsweise über die Gateway-Einheit GE an das Kommunikationsnetz angebunden. Daher werden z.B. lokale Änderungen D3 von Daten/Parameter während des Meldevorgangs 302 über die Gateway-Einheit GE bzw. über die lokale Servereinheit LS3 der Gateway-Einheit an die jeweilige Clienteinheit C3 geleitet. Zu Beginn des Meldevorgangs 302 kann von der jeweiligen lokalen Servereinheit LS1, LS3 eine Benachrichtigung an die jeweilige Clienteinheit C1, C3 beispielsweise als Information über einen lokale Änderung D1, D3 von spezifischen Daten und/oder Parametern gesendet werden.

Von der jeweiligen Clienteinheit C1, C3 werden in einem Weiterleitungsvorgang 303 an die zentrale Servereinheit ZS weitergeleitet und in einem Speichervorgang 304 in der der zentralen Servereinheit ZS zugeordneten Datenbank DB abgespeichert.

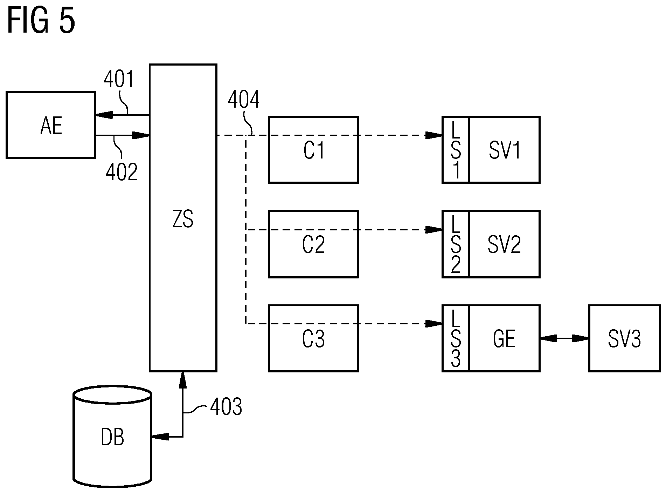

In Figur 5, welche ebenfalls schematisch und beispielhaft das erfindungsgemäße Steuerungssystem zeigt, wird beispielhaft eine Ausführungsvariante ohne bestehende Kommunikationsverbindung mit den Stromversorgungskomponenten SV1, SV2, SV3 gezeigt. D.h. das Steuerungssystem wird off-line betrieben. Ein Off-line-Betrieb kann beispielsweise während einer Planungsphase oder einer Umbauphase einer Anlage vorliegen, während welchen z.B. noch keine Kommunikationsverbindungen zu allen oder einzelnen Stromversorgungskomponenten SV1, SV2, SV3 bestehen. Für einen Off-line-Betrieb können beispielsweise vorab Vorlageeinheiten oder Strukturen von verschiedenen Stromversorgungskomponenten SV1, SV2, SV3 in die zentrale Servereinheit ZS bzw. die zugeordnete Datenbank DB geladen werden. Von diesen Vorlageeinheiten oder Strukturen werden beispielsweise Datentypen, Strukturen, etc. der Stromversorgungskomponenten SV1, SV2, SV3 bzw. der fix zugeordneten, lokalen Servereinheiten LS1, LS2, LS3 beschrieben. Die Stromversorgungskomponenten SV1, SV2, SV3 werden damit off-line auf Basis der Vorlageeinheiten oder Strukturen auf der zentralen Servereinheit zur Verfügung gestellt.

In einem Anzeige- und/oder Änderungsvorgang 401 können dann beispielsweise für ein so genanntes Off-line-Engineering die off-line verfügbaren Stromversorgungskomponenten SV1, SV2, SV3 auf einer Ein-/Ausgabeeinheit AE angezeigt und geändert werden. In einem Schreibvorgang 402 werden dann eingegebene Änderungen der Stromversorgungskomponenten SV1, SV2, SV3 auf die zentrale Servereinheit ZS übertragen und in einem Speichervorgang 403 in der der zentralen Servereinheit ZS zugeordneten Datenbank DB abgespeichert. Im Off-line-Betrieb können beispielweise Konfigurationen von Stromversorgungseinheiten SV1, SV2, SV3 für neue Anlagen und/oder Umbauten von Anlagen oder z.B. Versionsänderungen der so genannten Firmware von Stromversorgungskomponenten, etc. vorbereitet und auf Fehler überprüft werden.

Ist eine Kommunikationsverbindung zwischen den jeweiligen Clienteinheiten C1, C2, C3 und den lokalen Servereinheiten LS1, LS2, LS3, welche den Stromversorgungskomponenten SV1, SV2, SV3 fest zugeordnet sind, aufgebaut bzw. sind die Stromversorgungskomponenten SV1, SV2, SV3 "on-line", so können mit einem Übertragungsvorgang 404 die gespeicherten Änderungen an die jeweiligen lokalen Servereinheiten LS1, LS2, LS3 übertragen werden. Die Änderungen können dann auf den Stromversorgungskomponenten SV1, SV2, SV3 gespeichert werden und damit dort verfügbar. Mit der in Figur 5 dargestellten Ausführungsvariante können idealerweise z.B. mehrere Stromversorgungskomponenten SV1, SV2, SV3 einer Anlage relativ rasch konfiguriert werden.

## Patentansprüche

1. Steuerungssystem für Stromversorgungskomponenten (SV1, SV2, SV3) zumindest einer Anlage, von welchen eine Energieversorgung von Steuer- und/oder Computereinheiten der zumindest einen Anlage überwacht und gesteuert wird, umfassend:
- eine zentrale Servereinheit (ZS) mit zugeordneter Datenbank (DB) zum Abspeichern spezifischer Daten und/oder Parameter der jeweiligen Stromversorgungskomponenten (SV1, SV2, SV3);
**dadurch gekennzeichnet, dass** die zentrale Servereinheit (ZS) zum Senden eines Identifikationsaufrufs an die Stromversorgunqskomponenten eingerichtet ist, und dass das Steuerungssystem folgende Einheiten umfasst:
- Clienteinheiten (C1, C2, C3) zur Kommunikation und zur Übertragung der spezifischen Daten und/oder Parameter von und zu den Stromversorgungskomponenten (SV1, SV2, SV3), wobei für jede über ein Kommunikationsnetz angeschlossene und mittels des Identifikationsaufrufs identifizierte Stromversorgungskomponente eine eigene Clienteinheit (C1, C2, C3) generierbar ist;
- lokale Servereinheiten (LS1, LS2, LS3) zur Kommunikation mit den jeweiligen Clienteinheiten (C1, C2, C3), welche den jeweiligen Stromversorgungskomponenten (SV1, SV2, SV3) fix zugeordnet sind.

2. Steuerungssystem nach Anspruch 1, **dadurch gekennzeichnet, dass** weiterhin zumindest eine Ein-/Ausgabeeinheit (AE1, AE2) anbindbar ist, über welche die spezifischen Daten/Parameter für die jeweiligen Stromversorgungskomponenten (SV1, SV2, SV3) eingebbar, ausgebbar und/oder änderbar sind.

3. Steuerungssystem nach Anspruch 2, **dadurch gekennzeichnet, dass** für die Anbindung der zumindest einen Ein-/Ausgabeeinheit (AE1, AE2) eine Applikation, insbesondere Webapplikation, verwendbar ist und die Eingabe, Ausgabe und/oder Änderung von spezifischen Daten und/oder Parametern für die jeweiligen Stromversorgungskomponente (SV1, SV2, SV3) mittels eines Webbrowsers durchführbar ist.

4. Steuerungssystem nach Anspruch 2 oder 3, **dadurch gekennzeichnet, dass** die Eingabe, die Ausgabe und/oder Änderung von spezifischen Daten und/oder Parametern für die jeweiligen Stromversorgungskomponenten (SV1, SV2, SV3) über die zumindest eine Ein-/Ausgabeeinheit on-line und off-line vornehmbar ist.

5. Steuerungssystem nach einem der vorangegangenen Ansprüche, **dadurch gekennzeichnet, dass** für ein Generieren der jeweiligen Clienteinheiten (C1, C2, C3) Vorlageeinheiten vorgesehen sind.

6. Steuerungssystem nach einem der vorangegangenen Ansprüche, **dadurch gekennzeichnet, dass** weiterhin eine Gateway-Einheit (GE) vorgesehen ist, welcher eine lokale Servereinheit (LS3) zuordenbar ist und über welche eine Stromversorgungskomponente (SV3) mittels einer Punkt-zu-Punkt-Verbindung anbindbar ist, wobei eine Clienteinheit (C3) zur Kommunikation mit der der Gateway-Einheit (GE) zugeordneten, lokalen Servereinheit (LS3) generierbar ist.

7. Steuerungssystem nach einem der vorangegangenen Ansprüche, **dadurch gekennzeichnet, dass** die zentrale Servereinheit (ZS) und/oder die der zentralen Servereinheit (ZS) zugeordnete Datenbank (DB) und/oder die Clienteinheiten (C1, C2, C3) mittels so genanntem Cloud Computing bereitstellbar sind.

8. Steuerungssystem nach einem der vorangegangenen Ansprüche, **dadurch gekennzeichnet, dass** die Kommunikation zwischen den Clienteinheiten (C1, C2, C3) und den lokalen Servereinheiten (LS1, LS2, Ls3), welche den Stromversorgungskomponenten (SV1, SV2, SV3) fix zugeordnet sind, mittels einer sogenannten OPC-UA-Schnittstelle durchführbar ist.

9. Steuerungssystem nach einem der vorangegangenen Ansprüche, **dadurch gekennzeichnet, dass** für einen Zugang zu und/oder für eine Abfrage der spezifischen Daten und/oder Parameter der Stromversorgungskomponenten (SV1, SV2, SV3) eine Authentifizierung vorgesehen ist, wobei ein Umfang an angezeigten Daten und/oder zulässige Veränderungs- und Konfigurationsmöglichkeiten durch unterschiedliche Nutzerrollen definierbar sind.

10. Verfahren zur Inbetriebnahme, Steuerung und Überwachung von Stromversorgungskomponenten (SV1, SV2, SV3) zumindest einer Anlage, von welchen eine Energieversorgung von Steuer- und/oder Computereinheiten der zumindest einen Anlage überwacht und gesteuert wird, mit einem Steuerungssystem nach einem der Ansprüche 1 bis 9, **dadurch gekennzeichnet, dass:**
- Stromversorgungskomponenten (SV1, SV2, SV3), welche über ein Kommunikationsnetz mit dem Steuerungssystem verbunden sind, mittels eines Identifikationsaufrufs angesprochen werden (101),
- von lokalen Servereinheiten (LS1, LS2, LS3), welche den jeweiligen Stromversorgungskomponenten (SV1, SV2, SV3) fix zugeordnet sind, eine Antwortnachricht mit eindeutigen Identifikationsdaten (ID1, ID2, ID3) der jeweiligen Stromversorgungskomponente (SV1, SV2, SV3) zurückgesendet werden (102),
- für jede identifizierte Stromversorgungskomponente (SV1, SV2, SV3) eine Clienteinheit (C1, C2, C3) für eine Kommunikation mit der lokalen, der jeweiligen Stromversorgungskomponenten (SV1, SV2, SV3) zugeordneten Servereinheit (LS1, LS2, LS3) generiert wird (103), und
- die eindeutigen Identifikationsdaten (ID1, ID2, ID3) der jeweiligen Stromversorgungskomponenten (SV1, SV2, SV3) von der jeweiligen Clienteinheit (C1, C2, C3) an eine zentrale Servereinheit (ZS) übertragen (104) und in einer der zentralen Servereinheit (ZS) zugeordneten Datenbank (DB) abgelegt werden (105).

11. Verfahren nach Anspruch 10, **dadurch gekennzeichnet, dass** zum Generieren der Clienteinheit (C1, C2, C3) für eine jeweils identifizierte Stromversorgungskomponente (SV1, SV2, SV3) eine Vorlageeinheit herangezogen wird (103).

12. Verfahren nach einem der Ansprüche 10 bis 11, **dadurch gekennzeichnet, dass** bei bestehender Kommunikationsverbindung zwischen der jeweiligen Clienteinheit (C1, C2, C3) und der lokalen, der jeweiligen Stromversorgungskomponente (SV1, SV2, SV3) zugeordneten Servereinheit (LS1, LS2, LS3) und nach entsprechender Authentifizierung spezifische Daten und/oder Parameter der jeweiligen Stromversorgungskomponente auf einer Ein-/Ausgabeeinheit (AE1, AE2) ausgegeben werden, dass bei entsprechender Nutzerrolle die spezifischen Daten und/oder Parameter der jeweiligen Stromversorgungskomponente (SV1, SV2, SV3) geändert werden (201), dass die geänderten spezifischen Daten und/oder Parameter über die zentrale Servereinheit (ZS) und die jeweilige Clienteinheit (C1, C2, C3) an die lokale, der jeweiligen Stromversorgungskomponente (SV1, SV2, SV3) zugeordnete Servereinheit (LS1, LS2, LS3) weitergeleitet werden (202) und nach erfolgreicher Weiterleitung (203, 204) in der der zentralen Servereinheit (ZS) zugeordneten Datenbank (DB) abgespeichert werden (205).

13. Verfahren nach einem der Ansprüche 10 bis 12, **dadurch gekennzeichnet, dass** bei einer bestehenden Kommunikationsverbindung zwischen der jeweiligen Clienteinheit (C1, C2, C3) und der lokalen, der jeweiligen Stromversorgungskomponente (SV1, SV2, SV3) zugeordneten Servereinheit (LS1, LS2, LS3) lokale Änderungen (301, D1, D3) von spezifischen Daten und/oder Parametern der jeweiligen Stromversorgungskomponente (SV1, SV2, SV3) von der lokalen, der jeweiligen Stromversorgungskomponente (SV1, SV2, SV3) zugeordneten Servereinheit (LS1, LS2, LS3) an die jeweilige Clienteinheit (C1, C2, C3) gesendet werden (302), und dass nach Weiterleitung durch die jeweilige Clienteinheit (C1, C3, 303) die gesendeten spezifischen Daten und/oder Parameter der jeweiligen Stromversorgungskomponente (SV1, SV2, SV3) in der der zentralen Servereinheit (ZS) zugeordnete Datenbank (DB) abgespeichert werden (304).

14. Verfahren nach Anspruch 13, **dadurch gekennzeichnet, dass** bei lokaler Änderung von spezifischen Daten und/oder Parametern einer Stromversorgungskomponente (SV1, SV2, SV3) eine Benachrichtigung von der lokalen, der jeweiligen Stromversorgungskomponente (SV1, SV2, SV3) zugeordneten Servereinheit (LS1, LS2, LS3) an die jeweilige Clienteinheit (C1, C2, C3) gesendet wird (302).

15. Verfahren nach einem der Ansprüche 10 bis 14, **dadurch gekennzeichnet, dass** bei einer bestehenden Kommunikationsverbindung zwischen der jeweiligen Clienteinheit (C1, C2, C3) und der lokalen, der jeweiligen Stromversorgungskomponente (SV1, SV2, SV3) zugeordneten Servereinheit (LS1, LS2, LS3) die Stromversorgungskomponente (SV1, SV2, SV3) als "on-line" kennzeichnet wird.

16. Verfahren nach einem der Ansprüche 10 bis 15, **dadurch gekennzeichnet, dass** bei einer Unterbrechung der bestehenden Kommunikationsverbindung zwischen der jeweiligen Clienteinheit (C1, C2, C3) und der lokalen, der Stromversorgungskomponente (SV1, SV2, SV3) zugeordneten Servereinheit (LS1, LS2, LS3) ein Alarm ausgesendet wird.

17. Verfahren nach einem der Ansprüche 10 bis 11, **dadurch gekennzeichnet, dass** ohne bestehende Kommunikationsverbindung zwischen lokalen, den jeweiligen Stromversorgungskomponenten (SV1, SV2, SV3) zugeordneten Servereinheiten (LS1, LS2, LS3) und den zugehörigen Clienteinheiten (C1, C2, C3) Änderungen der spezifischen Daten und/oder Parameter der Stromversorgungskomponenten (SV1, SV2, SV3) über die Ein-/Ausgabeeinheit (AE1, AE2) vorgenommen werden (401, 402) und in der der zentralen Servereinheit (ZS) zugeordneten Datenbank (DB) gespeichert werden (403), und dass die Änderung erst bei bestehender Kommunikationsverbindung zwischen lokalen, den jeweiligen Stromversorgungskomponenten (SV1, SV2, SV3) zugeordneten Servereinheiten (LS1, LS2, LS3) und den jeweiligen Clienteinheiten (C1, C2, C3) an die jeweiligen lokalen, den jeweiligen Stromversorgungskomponenten (SV1, SV2, SV3) zugeordneten Servereinheiten (LS1, LS2, LS3) übertragen werden (404).

18. Verfahren nach einem der Ansprüche 10 bis 17, **dadurch gekennzeichnet, dass** für die bestehende Kommunikationsverbindung zwischen den lokalen, den jeweiligen Stromversorgungskomponenten (SV1, SV2, SV3) zugeordneten Servereinheiten (LS1, LS2, LS3) und den jeweiligen Clienteinheiten (C1, C2, C3) eine so genannte OPC-UA-Schnittstelle für einen Datenaustausch eingesetzt wird.

19. Verfahren nach einem der Ansprüche 10 bis 18, **dadurch gekennzeichnet, dass** für ein Versenden des Identifikationsaufrufs das so genannte Discovery and Configuration Protocol (DCP) verwendet wird (101).

## Claims

1. Control system for power supply components (SV1, SV2, SV3) of at least one system and by which an energy supply of control and/or computer units of the at least one system is monitored and controlled, comprising:
- a central server unit (ZS) with assigned database (DB) for storing specific data and/or parameters of the respective power supply components (SV1, SV2, SV3);
**characterised in that** the central server unit (ZS) is designed to send an identification call to the power supply components, and that the control system comprises the following units:
- client units (C1, C2, C3) for communication and for transmitting the specific data and/or parameters from and to the power supply components (SV1, SV2, SV3), wherein a separate client unit (C1, C2, C3) can be generated for each power supply component connected via a communication network and identified by means of the identification call;
- local server units (LS1, LS2, LS3) for communication with the respective client units (C1, C2, C3), which are permanently assigned to the respective power supply components (SV1, SV2, SV3).

2. Control system according to claim 1, **characterised in that** at least one input/output unit (AE1, AE2) can be additionally connected via which the specific data/parameters for the respective power supply components (SV1, SV2, SV3) can be input, output and/or changed.

3. Control system according to claim 2, **characterised in that** an application, in particular a web application, can be used for connecting the at least one input/output unit (AE1, AE2) and the inputting, outputting and/or changing of specific data and/or parameters for the respective power supply component (SV1, SV2, SV3) can be carried out by means of a web browser.

4. Control system according to claim 2 or 3, **characterised in that** the inputting, outputting and/or changing of specific data and/or parameters for the respective power supply components (SV1, SV2, SV3) can be carried out online and offline via the at least one input/output unit.

5. Control system according to one of the preceding claims, **characterised in that** templates are provided for generating the respective client units (C1, C2, C3).

6. Control system according to one of the preceding claims, **characterised in that** a gateway unit (GE) is additionally provided to which a local server unit (LS3) can be assigned and via which a power supply component (SV3) can be connected by means of a point-to-point connection, wherein a client unit (C3) for communicating with the local server unit (LS3) assigned to the gateway unit (GE) can be generated.

7. Control system according to one of the preceding claims, **characterised in that** the central server unit (ZS) and/or the database (DB) assigned to the central server unit (ZS) and/or the client units (C1, C2, C3) can be provided by means of so-called cloud computing.

8. Control system according to one of the preceding claims, **characterised in that** the communication between the client units (C1, C2, C3) and the local server units (LS1, LS2, Ls3) which are permanently assigned to the power supply components (SV1, SV2, SV3) can be carried out by means of a so-called OPC-UA interface.

9. The control system according to one of the preceding claims, **characterised in that** authentication is provided for accessing and/or interrogating the specific data and/or parameters of the power supply components (SV1, SV2, SV3), wherein a range of displayed data and/or permissible change and configuration options can be defined by different user roles.

10. Method for startup, control and monitoring of power supply components (SV1, SV2, SV3) of at least one system and by which an energy supply of control and/or computer units of the at least one system is monitored and controlled, comprising a control system according to one of claims 1 to 9, **characterised in that:**
- power supply components (SV1, SV2, SV3) which are connected to the control system via a communication network are addressed by means of an identification call (101) ,
- a response message with unique identification data (ID1, ID2, ID3) of the respective power supply component (SV1, SV2, SV3) is transmitted back (102) by local server units (LS1, LS2, LS3) which are permanently assigned to the respective power supply components (SV1, SV2, SV3),
- a client unit (C1, C2, C3) for communication with the local server unit (LS1, LS2, LS3) assigned to the respective power supply components (SV1, SV2, SV3) is generated (103) for each identified power supply component (SV1, SV2, SV3), and
- the unique identification data (ID1, ID2, ID3) of the respective power supply components (SV1, SV2, SV3) is transmitted (104) by the respective client unit (C1, C2, C3) to a central server unit (ZS) and stored (105) in a database (DB) assigned to the central server unit (ZS).

11. Method according to claim 10, **characterised in that** a template is used (103) to generate the client unit (C1, C2, C3) for an identified power supply component (SV1, SV2, SV3) .

12. Method according to one of claims 10 to 11, **characterised in that** in the case of an existing communication link between the respective client unit (C1, C2, C3) and local server unit (LS1, LS2, LS3) assigned to the respective power supply component (SV1, SV2, SV3), and after appropriate authentication, specific data and/or parameters of the respective power supply component are output on an input/output unit (AE1, AE2), that if the user role is appropriate, the specific data and/or parameters of the respective power supply component (SV1, SV2, SV3) are changed (201), that the changed specific data and/or parameters are forwarded (202) via the central server unit (ZS) and the respective client unit (C1, C2, C3) to the local server unit (LS1, LS2, LS3) assigned to the respective power supply component (SV1, SV2, SV3) and, after successful forwarding (203, 204), are stored (205) in the database (DB) assigned to the central server unit (ZS).

13. Method according to one of claims 10 to 12, **characterised in that** in the case of an existing communication link between the respective client unit (C1, C2, C3) and the local server unit (LS1, LS2, LS3) assigned to the respective power supply component (SV1, SV2, SV3), local changes (301, D1, D3) of specific data and/or parameters of the respective power supply component (SV1, SV2, SV3) are transmitted (302) to the respective client unit (C1, C2, C3) by the local server unit (LS1, LS2, LS3) assigned to the respective power supply component (SV1, SV2, SV3), and that after forwarding by the respective client unit (C1, C3, 303) the transmitted specific data and/or parameters of the respective power supply component (SV1, SV2, SV3) are stored (304) in the database (DB) assigned to the central server unit (ZS).

14. Method according to claim 13, **characterised in that** if specific data and/or parameters of a power supply component (SV1, SV2, SV3) are changed locally, a notification is sent (302) to the respective client unit (C1, C2, C3) by the local server unit (LS1, LS2, LS3) assigned to the respective power supply component (SV1, SV2, SV3).

15. Method according to one of claims 10 to 14, **characterised in that** in the case of an existing communication link between the respective client unit (C1, C2, C3) and the local server unit (LS1, LS2, LS3) assigned to the respective power supply component (SV1, SV2, SV3), the power supply component (SV1, SV2, SV3) is indicated as "online".

16. Method according to one of claims 10 to 15, **characterised in that** in the event of a break in the existing communication link between the respective client unit (C1, C2, C3) and the local server unit (LS1, LS2, LS3) assigned to the respective power supply component (SV1, SV2, SV3), an alarm is sent out.

17. Method according to one of claims 10 to 11, **characterised in that** in the absence of an existing communication link between local server units (LS1, LS2, LS3) assigned to the respective power supply components (SV1, SV2, SV3) and the associated client units (C1, C2, C3), changes to the specific data and/or parameters of the power supply components (SV1, SV2, SV3) are carried out (401, 402) via the input/output unit (AE1, AE2) and stored (403) in the database (DB) assigned to the central server unit (ZS), and that the change is only transmitted (404) to the respective local server units (LS1, LS2, LS3) assigned to the respective power supply components (SV1, SV2, SV3) if a communication link exists between local server units (LS1, LS2, LS3) assigned to the respective power supply components (SV1, SV2, SV3) and the respective client units (C1, C2, C3).

18. Method according to one of claims 10 to 17, **characterised in that,** for the existing communication link between the local server units (LS1, LS2, LS3) assigned to the respective power supply components (SV1, SV2, SV3) and the respective client units (C1, C2, C3), a so-called OPC-UA interface is used for data exchange.

19. Method according to one of claims 10 to 18, **characterised in that** the so-called Discovery and Configuration Protocol (DCP) is used (101) for transmitting the identification call.

## Revendications

1. Système de commande pour des éléments d'alimentation électrique (SV1, SV2, SV3) d'au moins une installation, par lesquels une alimentation en énergie d'unités de commande et/ou informatiques de l'au moins une installation est surveillée et commandée, comprenant :
- une unité centrale de serveur (ZS) avec base de données (DB) attribuée pour stocker des données et/ou paramètres spécifiques des éléments d'alimentation électrique (SV1, SV2, SV3) respectifs ;
**caractérisé en ce que** l'unité centrale de serveur (ZS) est conçue pour envoyer un appel d'identification aux éléments d'alimentation électrique, et que le système de commande comprend les unités suivantes :
- des unités client (C1, C2, C3) pour communiquer et transmettre les données et/ou paramètres spécifiques par et vers les éléments d'alimentation électrique (SV1, SV2, SV3), dans lequel une unité client propre (C1, C2, C3) peut être générée pour chaque élément d'alimentation électrique raccordé par un réseau de communication et identifié au moyen de l'appel d'identification ;
- des unités de serveurs locaux (LS1, LS2, LS3) pour communiquer avec les unités client (C1, C2, C3) respectives qui sont attribuées de manière fixe aux éléments d'alimentation électrique (SV1, SV2, SV3) respectifs.

2. Système de commande selon la revendication 1, **caractérisé en ce qu'**en outre, au moins une unité d'entrée/d'émission (AE1, AE2) peut être reliée, par laquelle les données/paramètres spécifiques pour les éléments d'alimentation électrique (SV1, SV2, SV3) respectifs peuvent être entrés, émis et/ou modifiés.

3. Système de commande selon la revendication 2, **caractérisé en ce que** pour relier l'au moins une unité d'entrée/d'émission(AE1, AE2), une application, en particulier une application web, peut être utilisée, et l'entrée, l'émission et/ou la modification de données et/ou paramètres spécifiques pour les éléments d'alimentation électrique (SV1, SV2, SV3) respectifs peut être exécutée au moyen d'un navigateur web.

4. Système de commande selon la revendication 2 ou 3, **caractérisé en ce que** l'entrée, l'émission et/ou la modification de données et/ou paramètres spécifiques pour les éléments d'alimentation électrique (SV1, SV2, SV3) respectifs peut être réalisée en ligne et hors ligne par le biais de l'au moins une unité d'entrée/d'émission.

5. Système de commande selon l'une des revendications précédentes, **caractérisé en ce que** des unités de modèles sont prévues pour générer les unités client (C1, C2, C3) respectives.

6. Système de commande selon l'une des revendications précédentes, **caractérisé en ce qu'**en outre, une unité de passerelle (GE) est prévue, à laquelle peut être attribuée une unité de serveur local (LS3) et par laquelle un élément d'alimentation électrique (SV3) peut être relié au moyen d'une liaison point par point, dans lequel une unité client (C3) peut être générée pour communiquer avec l'unité de serveur local (LS3) attribuée à l'unité de passerelle (GE).

7. Système de commande selon l'une des revendications précédentes, **caractérisé en ce que** l'unité de serveur central (ZS) et/ou la base de données (DB) attribuée à l'unité de serveur central (ZS) et/ou les unités client (C1, C2, C3) peuvent être fournies au moyen dudit cloud computing.

8. Système de commande selon l'une des revendications précédentes, **caractérisé en ce que** la communication entre les unités client (C1, C2, C3) et les unités de serveur locaux (LS1, LS2, LS3) qui sont attribuées de manière fixe aux éléments d'alimentation électrique (SV1, SV2, SV3), peut être exécutée au moyen d'une dite interface OPC-UA.

9. Système de commande selon l'une des revendications précédentes, **caractérisé en ce qu'**une authentification est prévue pour un accès aux et/ou une interrogation des données et/ou paramètres spécifiques des éléments d'alimentation électrique (SV1, SV2, SV3), dans lequel un volume des données affichées et/ou possibilités de modification et de configuration autorisées peut être défini par différents rôles utilisateur.

10. Procédé de mise en marche, commande et surveillance d'éléments d'alimentation électrique (SV1, SV2, SV3) d'au moins une installation, par lesquels une alimentation en énergie d'unités de commande et/ou informatiques de l'au moins une installation peut être surveillée et commandée, comprenant un système de commande selon l'une des revendications 1 à 9, **caractérisé en ce que**
- des éléments d'alimentation électrique (SV1, SV2, SV3), qui sont reliés au système de commande par un réseau de communication, sont appelés (101) au moyen d'un appel d'identification,
- un message de réponse avec des données d'identification univoques (ID1, ID2, ID3) de l'élément d'alimentation électrique (SV1, SV2, SV3) respectif est renvoyé (102) par des unités de serveurs locaux (LS1, LS2, LS3) qui sont attribuées de manière fixe aux éléments d'alimentation électrique (SV1, SV2, SV3), et
- une unité cliente (C1, C2, C3) pour communiquer avec l'unité de serveurs locaux (LS1, LS2, LS3) attribuée aux éléments d'alimentation électrique (SV1, SV2, SV3) respectifs est générée (103) pour chaque élément d'alimentation électrique (SV1, SV2, SV3) identifié, et
- les données d'identification univoques (ID1, ID2, ID3) des éléments d'alimentation électrique (SV1, SV2, SV3) respectifs sont transmises (104) par l'unité cliente (C1, C2, C3) respective à une unité de serveur central (ZS) et déposées (105) dans une base de données (DB) attribuée à l'unité de serveur central (ZS).

11. Procédé selon la revendication 10, **caractérisé en ce qu'**une unité de modèle est utilisée (103) pour générer l'unité client (C1, C2, C3) pour un élément d'alimentation électrique (SV1, SV2, SV3) identifié respectif.

12. Procédé selon l'une des revendications 10 à 11, **caractérisé en ce qu'**en cas de liaison de communication existante entre l'unité client (C1, C2, C3) respective et l'unité de serveur local (LS1, LS2, LS3) attribuée à l'élément d'alimentation électrique (SV1, SV2, SV3) respectif, et après authentification correspondante, des données et/ou paramètres spécifiques des éléments d'alimentation électrique respectifs sont émis sur une unité d'entrée/d'émission (AE1, AE2), qu'avec un rôle utilisateur correspondant, les données et/ou paramètres spécifiques de l'élément d'alimentation électrique (SV1, SV2, SV3) respectif sont modifiés (201), que les données et/ou paramètres spécifiques modifiés sont transmis (202) par l'unité de serveur central (ZS) et l'unité client (C1, C2, C3) respective à l'unité de serveur local (LS1, LS2, LS3) attribuée à l'élément d'alimentation électrique (SV1, SV2, SV3) respectif et après transmission réussie (203, 204), stockés (205) dans la base de données (DB) attribuée à l'unité de serveur central (ZS).

13. Procédé selon l'une des revendications 10 à 12, **caractérisé en ce qu'**avec une liaison de communication existante entre l'unité client (C1, C2, C3) respective et l'unité de serveur local (LS1, LS2, LS3) attribuée à l'élément d'alimentation électrique (SV1, SV2, SV3) respectif, des modifications locales (301, D1, D3) de données et/ou paramètres spécifiques de l'élément d'alimentation électrique (SV1, SV2, SV3) respectif sont envoyées (302) à l'unité client (C1, C2, C3) respective par l'unité de serveur local (LS1, LS2, LS3) attribuée à l'élément d'alimentation électrique (SV1, SV2, SV3) respectif, et qu'après transmission par l'unité client (C1, C3, 303) respective, les données et/ou paramètres spécifiques de l'élément d'alimentation électrique (SV1, SV2, SV3) respectif envoyés sont stockés (304) dans la base de données (DB) attribuée à l'unité de serveur central (ZS).

14. Procédé selon la revendication 13, **caractérisé en ce qu'**en cas de modification locale de données et/ou paramètres spécifiques d'un élément d'alimentation électrique (SV1, SV2, SV3), un message de l'unité de serveur local (LS1, LS2, LS3) attribuée à l'élément d'alimentation électrique (SV1, SV2, SV3) respectif est envoyé à l'unité client (C1, C2, C3) respective.

15. Procédé selon l'une des revendications 10 à 14, **caractérisé en ce qu'**avec une liaison de communication existante entre l'unité client (C1, C2, C3) respective et l'unité de serveur local (LS1, LS2, LS3) attribuée à l'élément d'alimentation électrique (SV1, SV2, SV3) respectif, l'élément d'alimentation électrique (SV1, SV2, SV3) est identifié comme étant « en ligne ».

16. Procédé selon l'une des revendications 10 à 15, **caractérisé en ce qu'**une alarme est émise en cas d'interruption de la liaison de communication existante entre l'unité client (C1, C2, C3) respective et l'unité de serveur local (LS1, LS2, LS3) attribuée à l'élément d'alimentation électrique (SV1, SV2, SV3) .

17. Procédé selon l'une des revendications 10 à 11, **caractérisé en ce que** sans liaison de communication existante entre des unités de serveurs locaux (LS1, LS2, LS3) attribuées aux éléments d'alimentation électrique (SV1, SV2, SV3) respectifs et les unités client (C1, C2, C3) correspondantes, des modifications des données et/ou paramètres spécifiques des éléments d'alimentation électrique (SV1, SV2, SV3) sont effectuées (401, 402) par le biais de l'unité d'entrée/d'émission (AE1, AE2) et stockées (403) dans la base de données (DB) attribuée à l'unité de serveur central (ZS), et que la modification n'est transmise (404) aux unités de serveurs locaux (LS1, LS2, LS3) respectives attribuées aux éléments d'alimentation électrique (SV1, SV2, SV3) respectifs qu'en cas de liaison de communication existante entre des unités de serveurs locaux (LS1, LS2, LS3) attribuées aux éléments d'alimentation électrique (SV1, SV2, SV3) et les unités client (C1, C2, C3) respectives.

18. Procédé selon l'une des revendications 10 à 17, **caractérisé en ce que** pour la liaison de communication existante entre les unités de serveurs locaux (LS1, LS2, LS3) attribuées aux éléments d'alimentation électrique (SV1, SV2, SV3) respectifs et les unités client (C1, C2, C3) respectives, une dite interface OPC-UA est utilisée pour un échange de données.

19. Procédé selon l'une des revendications 10 à 18, **caractérisé en ce que** pour un envoi de l'appel d'identification, ledit Discovery and Configuration Protocol (DCP) est employé (101) .
